(19) Europäisches Patentamt / European Patent Office / Office européen des brevets

(11) EP 3 585 057 A1

(12) **EUROPEAN PATENT APPLICATION**

(43) Date of publication:
**25.12.2019 Bulletin 2019/52**

(21) Application number: **18305762.9**

(22) Date of filing: **19.06.2018**

(51) Int Cl.:
*H04N 19/86* (2014.01)        *H04N 19/82* (2014.01)
*H04N 19/70* (2014.01)        *H04N 19/117* (2014.01)
*H04N 19/14* (2014.01)        *H04N 19/182* (2014.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **InterDigital VC Holdings, Inc.**
**Wilmington, Delaware 19809 (US)**

(72) Inventors:
• **CHEVANCE, Christophe**
  **35576 Cesson-Sévigné Cedex (FR)**
• **FRANCOIS, Edouard**
  **35576 Cesson-Sévigné Cedex (FR)**
• **HIRON, Franck**
  **35576 Cesson-Sévigné Cedex (FR)**

(74) Representative: **Huchet, Anne et al**
    **InterDigital CE Patent Holdings**
    **20, rue Rouget de Lisle**
    **92130 Issy-les-Moulineaux (FR)**

(54) **PICTURE ENCODING AND DECODING WITH IN-LOOP FILTER**

(57) A decoding method is disclosed. First a picture part is decoded.

Second, the decoded picture part is filtered with a loop filter. At least one parameter of the loop filter is determined responsive to a local luma value.

FIGURE 12

EP 3 585 057 A1

**Description**

## 1. TECHNICAL FIELD

At least one of the present embodiments generally relate to a method and a device for picture encoding and decoding, and more particularly, to a method and a device for picture encoding and decoding with in-loop filter.

## 2. BACKGROUND

To achieve high compression efficiency, image and video coding schemes usually employ prediction and transform to leverage spatial and temporal redundancy in the video content. Generally, intra or inter prediction is used to exploit the intra or inter frame correlation, then the differences between the original image block and the predicted image block, often denoted as prediction errors or prediction residuals, are transformed, quantized and entropy coded. During encoding the original image block is usually partitioned/split into sub-blocks possibly using quad-tree partitioning. To reconstruct the video, the compressed data is decoded by inverse processes corresponding to the prediction, transform, quantization and entropy coding.

Traditional video coding scheme includes in-loop filtering processes for improving the quality of the reconstructed images. In-loop filtering can comprise several filtering processes such as Deblocking Filtering (DBF), Sample Adaptive Offset (SAO) filtering as in HEVC, and/or Adaptive Loop Filtering ALF such as Wiener filters. These filters can be applied successively in this order or in a different order.

## 3. BRIEF SUMMARY

According to a general aspect of at least one embodiment, a decoding method is disclosed that comprises:

- decoding a picture part;
- filtering the decoded picture part with a loop filter wherein at least one parameter of said loop filter is determined responsive to a local luma value.

According to a general aspect of at least one embodiment, an encoding method is disclosed that comprises:

- reconstructing a picture part;
- filtering the reconstructed picture part with a loop filter wherein at least one parameter of said loop filter is determined responsive to a local luma value.

According to a general aspect of at least one embodiment, a decoding device is disclosed that comprises one or more processor configured to perform:

- decoding a picture part;
- filtering the decoded picture part with a loop filter wherein at least one parameter of said loop filter is determined responsive to a local luma value.

According to a general aspect of at least one embodiment, an encoding device is disclosed that comprises one or more processor configured to perform:

- reconstructing a picture part;
- filtering the reconstructed picture part with a loop filter wherein at least one parameter of said loop filter is determined responsive to a local luma value.

According to a general aspect of at least one embodiment, a decoding device is disclosed that comprises:

- a decoder configured to decode a picture part;
- a filtering unit configured to filter the decoded picture part with a loop filter wherein at least one parameter of said loop filter is determined responsive to a local luma value.

According to a general aspect of at least one embodiment, an encoding device is disclosed that comprises:

- a reconstructing unit configured to reconstruct a picture part;

- a filtering unit configured to filter the reconstructed picture part with a loop filter wherein at least one parameter of said loop filter is determined responsive to a local luma value.

According to a general aspect of at least one embodiment, a signal is disclosed that comprises data generated according to the encoding method or encoding device according to any one of the embodiments.

According to a general aspect of at least one embodiment, a device is disclosed that comprises:

a decoding device according to any of the embodiments disclosed; and

at least one of (i) an antenna configured to receive a signal over the air, the signal including the video having the image, (ii) a band limiter configured to limit the received signal to a band of frequencies that includes the video having the image, or (iii) a display configured to display the output.

One or more of the present embodiments also provide a computer readable storage medium having stored thereon instructions for encoding or decoding video data according to any of the methods described above. The present embodiments also provide a computer readable storage medium having stored thereon a signal generated according to the methods described above. The present embodiments also provide a method and apparatus for transmitting the signal generated according to the methods described above. The present embodiments also provide a computer program product including instructions for performing any of the methods described.

## 4. BRIEF SUMMARY OF THE DRAWINGS

- Figure 1 represents an exemplary architecture of a transmitter 000 configured to encode a picture in a bitstream according to a specific and non-limiting embodiment;
- Figure 2 illustrates an exemplary video encoder adapted to execute the encoding method according to any one of the embodiments;
- Figure 3 and 4 represent flowcharts of deblocking filtering according to HEVC;
- Figure 5 depicts block edges filtered by a deblocking filter;
- Figure 6 depicts the pixels of a block to be filtered;
- Figure 7 represents a flowchart of a method for encoding a picture block in a bitstream according to a specific and non-limiting embodiment;
- Figures 8 and 9 depict a flowchart of deblocking filtering processes according to various embodiments;
- Figure 10 represents an exemplary architecture of a receiver configured to decode a picture from a bitstream according to a specific and non-limiting embodiment;
- Figure 11 illustrates a block diagram of an exemplary video decoder adapted to execute the decoding method according to any one of the embodiments; and
- Figure 12 represents a flowchart of a method for decoding a picture from a bitstream according to a specific and non-limiting embodiment.

## 5. DETAILED DESCRIPTION

A picture is an array of luma samples in monochrome format or an array of luma samples and two corresponding arrays of chroma samples (or three arrays of tri-chromatic color samples such as RGB) in 4:2:0, 4:2:2, and 4:4:4 colour format. Generally, a "block" addresses a specific area in a sample array (e.g., luma Y), and a "unit" includes the collocated block of all color components (luma Y and possibly chroma Cb and chroma Cr). A slice is an integer number of basic coding units such as HEVC coding tree units or H.264 macroblock units. A slice can consist of a complete picture as well as part thereof. Each slice can include one or more slice segments.

In the following, the word "reconstructed" and "decoded" can be used interchangeably. Usually but not necessarily "reconstructed" is used on the encoder side while "decoded" is used on the decoder side. It should be noted that the term "decoded" or "reconstructed" can mean that a bitstream is partially "decoded" or "reconstructed," for example, the signals obtained after deblocking filtering but before SAO filtering, and the reconstructed samples can be different from the final decoded output that is used for display. We can also use the terms "image," "picture," and "frame" interchangeably. The terms "pixel" and "sample" can be used interchangeably. The terms "partition" and "split" are used interchangeably.

The terms HDR (high dynamic range) and SDR (standard dynamic range) are used in this disclosure. Those terms often convey specific values of dynamic range to those of ordinary skill in the art. However, additional embodiments are also intended in which a reference to HDR is understood to mean "higher dynamic range" and a reference to SDR is understood to mean "lower dynamic range". Such additional embodiments are not constrained by any specific values of dynamic range that might often be associated with the terms "high dynamic range" and "standard dynamic range".

At least one embodiment is directed towards a method and device for encoding (respectively decoding) with in-loop filters, e.g. a deblocking filter, adapted to High Dynamic Range content (HDR). To this aim, in at least one embodiment, at least one filter parameter is adapted to the properties of the signal to be encoded.

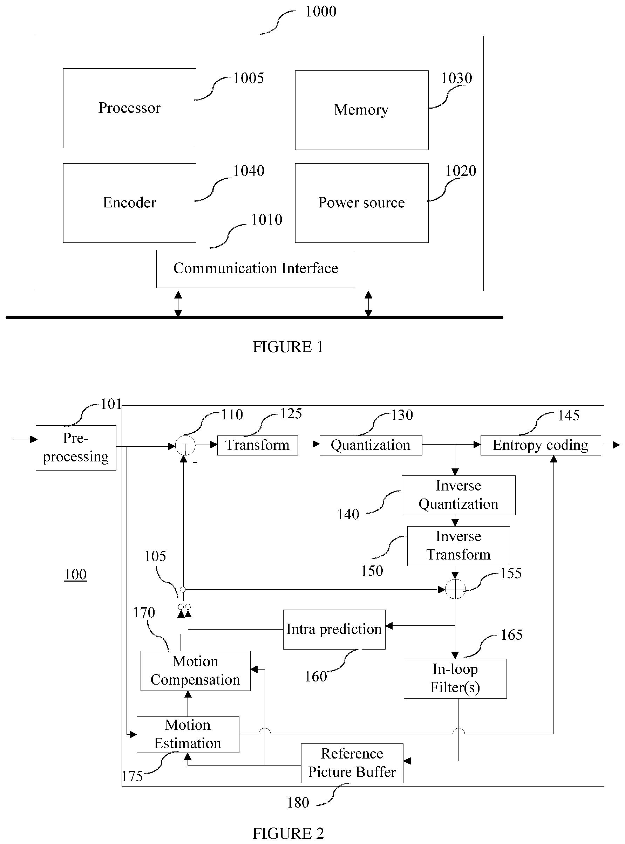

**Figure 1** represents an exemplary architecture of a transmitter 1000 configured to encode a picture in a bitstream according to a specific and non-limiting embodiment.

The transmitter 1000 comprises one or more processor(s) 1005, which could comprise, for example, a CPU, a GPU and/or a DSP (English acronym of Digital Signal Processor), along with internal memory 1030 (e.g. RAM, ROM, and/or EPROM). The transmitter 1000 comprises one or more communication interface(s) 1010 (e.g. a keyboard, a mouse, a touchpad, a webcam), each adapted to display output information and/or allow a user to enter commands and/or data; and a power source 1020 which can be external to the transmitter 1000. The transmitter 1000 can also comprise one or more network interface(s) (not shown). Encoder module 1040 represents the module that can be included in a device to perform the coding functions. Additionally, encoder module 1040 can be implemented as a separate element of the transmitter 1000 or can be incorporated within processor(s) 1005 as a combination of hardware and software as known to those skilled in the art.

The picture can be obtained from a source. According to different embodiments, the source can be, but is not limited to:

- a local memory, e.g. a video memory, a RAM, a flash memory, a hard disk;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- a picture capturing circuit (e.g. a sensor such as, for example, a CCD (or Charge-Coupled Device) or CMOS (or Complementary Metal-Oxide-Semiconductor)).

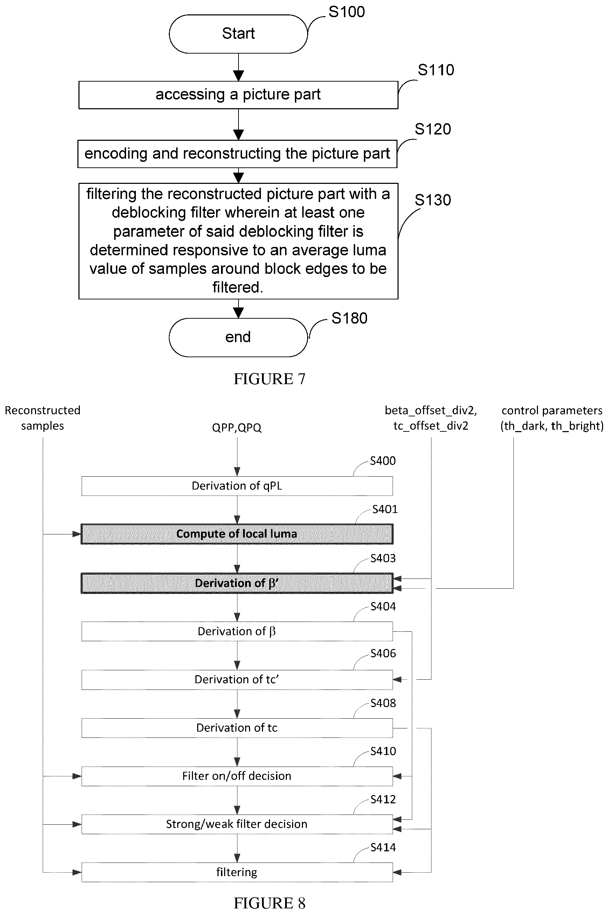

According to different embodiments, the bitstream can be sent to a destination. As an example, the bitstream is stored in a remote or in a local memory, e.g. a video memory or a RAM, a hard disk. In a variant, the bitstream is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network. According to an exemplary and non-limiting embodiment, the transmitter 1000 further comprises a computer program stored in the memory 1030. The computer program comprises instructions which, when executed by the transmitter 1000, in particular by the processor 1005, enable the transmitter 1000 to execute the encoding method described with reference to any one of the Figures 7, 8 and 9. According to a variant, the computer program is stored externally to the transmitter 1000 on a non-transitory digital data support, e.g. on an external storage medium such as a HDD, CD-ROM, DVD, a read-only and/or DVD drive and/or a DVD Read/Write drive, all known in the art. The transmitter 1000 thus comprises a mechanism to read the computer program. Further, the transmitter 1000 could access one or more Universal Serial Bus (USB)-type storage devices (e.g., "memory sticks.") through corresponding USB ports (not shown).

According to exemplary and non-limiting embodiments, the transmitter 1000 can be, but is not limited to:

- a mobile device;
- a communication device;
- a game device;
- a tablet (or tablet computer);
- a laptop;
- a still picture camera;
- a video camera;
- an encoding chip or encoding device/apparatus;
- a still picture server; and
- a video server (e.g. a broadcast server, a video-on-demand server or a web server).

**Figure 2** illustrates an exemplary video encoder 100, e.g. an encoder of HEVC type, adapted to execute the encoding method of any one of Figures 7, 8 and 9. Figure 2 may also illustrate an encoder in which improvements are made to the HEVC standard or an encoder employing technologies similar to HEVC, such as a JEM (Joint Exploration Model) encoder. The encoder 100 is an example of a transmitter 1000 or part of such a transmitter 1000.

For coding, a picture is usually partitioned into basic coding units, e.g. into coding tree units (CTU) in HEVC or into macroblock units in H.264. A set of possibly consecutive basic coding units is grouped into a slice. A basic coding unit contains the basic coding blocks of all color components. In HEVC, the smallest coding tree block (CTB) size 16x16 corresponds to a macroblock size as used in previous video coding standards. It will be understood that, although the terms CTU and CTB are used herein to describe encoding/decoding methods and encoding/decoding apparatus, these methods and apparatus should not be limited by these specific terms that can be worded differently (e.g. macroblock) in other standards such as H.264.

In HEVC coding, a picture is partitioned into CTUs of square shape with a configurable size typically 64x64, 128x128, or 256x256. A CTU is the root of a quad-tree partitioning into 4 square Coding Units (CU) of equal size, i.e. half of the parent block size in width and in height. A quad-tree is a tree in which a parent node can be split into four child nodes, each of which can become parent node for another split into four child nodes. In HEVC, a coding Block (CB) is partitioned into one or more Prediction Blocks (PB) and forms the root of a quadtree partitioning into Transform Blocks (TBs). Corresponding to the Coding Block, Prediction Block and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB and TB of the luma component applies to the corresponding CU, PU and TU.

In more recent encoding systems, a CTU is the root of a coding tree partitioning into Coding Units (CU). A coding tree is a tree in which a parent node (usually corresponding to a CU) can be split into child nodes (e.g. into 2, 3 or 4 child nodes), each of which can become parent node for another split into child nodes. In addition to the quad-tree split mode, new split modes (binary tree symmetric split modes, binary tree asymmetric split modes and triple tree split modes) are also defined that increase the total number of possible split modes. The coding tree has a unique root node, e.g. a CTU. A leaf of the coding tree is a terminating node of the tree. Each node of the coding tree represents a CU that can be further split into smaller CUs also named sub-CUs or more generally sub-blocks. Once the partitioning of a CTU into CUs is determined, CUs corresponding to the leaves of the coding tree are encoded. The partitioning of a CTU into CUs and the coding parameters used for encoding each CU (corresponding to a leaf of the coding tree) can be determined on the encoder side through a rate distortion optimization procedure. There is no partitioning of a CB into PBs and TBs, i.e. a CU is made of a single PU and a single TU.

Back to figure 2, before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing, and attached to the bitstream.

In the exemplary encoder 100, a picture is encoded by the encoder elements as described below. The picture to be encoded is processed in units of CUs. Each CU is encoded using either an intra or inter mode. When a CU is encoded in an intra mode, it performs intra prediction (160). In an inter mode, motion estimation (175) and compensation (170) are performed. The encoder decides (105) which one of the intra mode or inter mode to use for encoding the CU, and indicates the intra/inter decision by a prediction mode flag. Residuals are calculated by subtracting (110) a predicted block (also known as a predictor) from the original picture block.

The residuals are transformed (125) and quantized (130). The quantized transform coefficients, as well as motion vectors and other syntax elements, are entropy coded (145) to output a bitstream. The encoder can also skip the transform or bypass both transform and quantization, i.e., the residual is coded directly without the application of the transform or quantization processes. In direct PCM coding, no prediction is applied and the coding unit samples are directly coded into the bitstream.

The encoder comprises a decoding loop and thus decodes an encoded block to provide a reference for further predictions. The quantized transform coefficients are de-quantized (140) and inverse transformed (150) to decode residuals. A picture block is reconstructed by combining (155) the decoded residuals and the predicted block. An in-loop filter (165) is applied to the reconstructed picture, for example, to perform deblocking/SAO (Sample Adaptive Offset) filtering to reduce coding artifacts. The filtered picture can be stored in a reference picture buffer (180) and used as reference for other pictures.

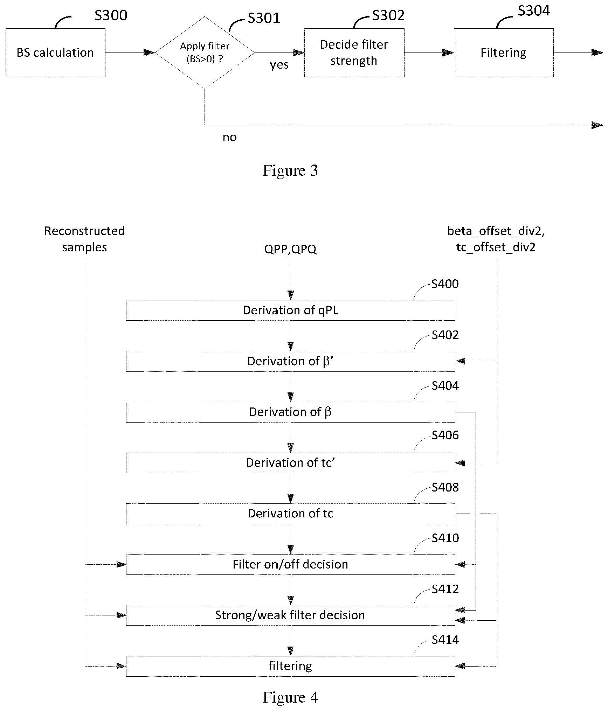

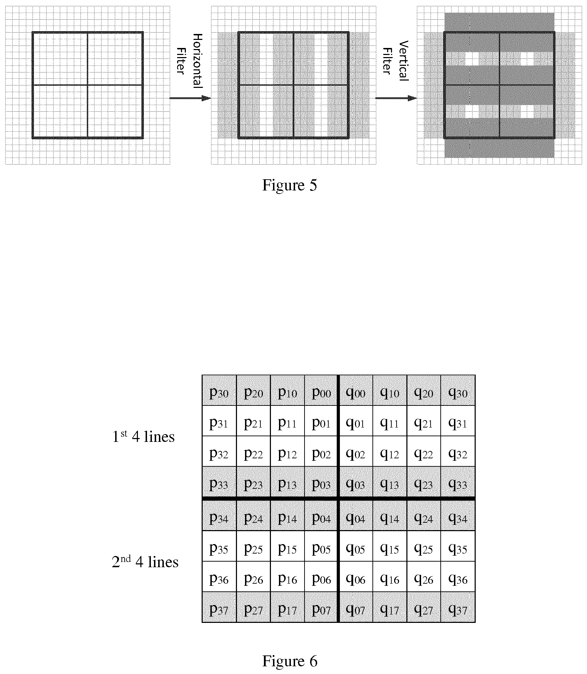

**Figures 3 and 4** represent flowcharts of deblocking filtering according to HEVC. The deblocking filter in AVC, HEVC or in JEM applies along the CUs boundaries. In HEVC, the DBF applies on an 8x8 pixels grid (for luma). Up to 3 samples on one side of the border and 3 samples on the other side can be filtered. For each CU, the vertical edges are filtered first, then the horizontal edges are filtered as depicted on **Figure 5.**

Back to Figure 3, a boundary strength denoted BS is determined (S300). BS can be computed from data such as block type, motion data. BS is calculated on a 4x4 block basis and is then re-mapped to an 8x8 grid as illustrated by **Figure 6.** The filtering of the edge between two 4x4 blocks uses a single BS value. This single BS value is the maximum value of the BS from 4x4 block on one side of the edge, and the BS from 4x4 block on the other side of the edge as illustrated by **Figure 6.** BS can take 3 values: 0, 1 or 2. Luma block is possibly filtered if BS=1 or 2, Chroma block is filtered if BS=2. It is decided whether or not to filter (S301). If (BS=0), no filter is applied.

In the case where BS>0, the decision to use no filter, or a Strong or Weak filter (S302), is made per group of 4 lines (horizontal case) or 4 columns (vertical case) based on :

- local laplacians and gradients features computed as follows :

- $dp0 = |p_{20} - 2*p_{10} + p_{00}|$
- $dp1 = |p_{23} - 2*p_{13} + p_{03}|$
- $dq0 = |q_{20} - 2*q_{10} + q_{00}|$
- $dq3 = |q_{23} - 2*q_{13} + q_{03}|$
- $|p_{30} - p_{00}|$
- $|q_{00} - q_{30}|$
- $|p_{00} - q_{00}|$
- $|p_{33} - p_{03}|$
- $|q_{03} - q_{33}|$
- $|p_{03} - q_{03}|$

- parameters derived from the average local QP on both sides of the boundary: $\beta$ and tc.

As an example, if the following condition is false, then the filter is not applied: $dp0+dp1+dq0+dq3 <\beta$
If all of the following three conditions are true for lines i=0 and i=3, then Strong filtering is applied:

$|p_{2i} - 2*p_{1i} + p_{0i}| + |q_{2i} - 2*q_{1i} + q_{0i}| <\beta/8,$
$|p_{3i} - p_{0i}| + |q_{0i} - q_{3i}| <\beta/8,$
$|p_{0i} - q_{0i}| < 2.5*tc$

Otherwise, normal filtering applies.
In the case where filtering applies (S304), the filtering applies line per line (respectively column per column) for a group of 4 lines (respectively a group of 4 columns), for which the filtering decision (S302) is made, using tc parameter for clipping :

- The Strong filter modifies 3 pixels on both sides of the border
- The Weak filter modifies 1 or 2 pixels on both sides of the border

- The decision for the weak filter to filter 1 or 2 pixels is made on both side per line/column k based on the analysis of (qk0 - pk0) and (qk1 - pk1).

Filtering S304 of figure 3 is detailed on figure 4. DBF filtering makes use of two parameters tc and $\beta$ whose values are determined based on filter strength BS and an average quantization parameter (QP). Offsets can also be used to change the values of tc and $\beta$. These offsets can be used to control the sharpness or smoothness of the video, e.g. by reducing or amplifying the block frontiers smoothing. In HEVC, the syntax elements defined at the slice level slice_tc_offset_div2 and slice_beta_offset_div2 are used to derived tc and $\beta$.
In the following, syntax elements slice_tc_offset_div2 and slice_beta_offset_div2 are used for the description of the embodiments for the sake of simplicity.
However, it is clear that in the description of all embodiments, slice_tc_offset_div2 and slice_beta_offset_div2 can be replaced by pps_tc_offset_div2 and pps_beta_offset_div2 defined at the Picture Parameter Set (PPS) level. These syntax elements specify the deblocking parameter offsets for $\beta$ and tC (divided by 2) for the current slice.
At step S400, qPL is determined as follows: $qPL= ((QPP+QPQ+1)>>1)$. QPP is the luma QP for the P pixels and QPQ is the luma QP for the Q pixels, "x >> y" is a right shift of x by y binary digits. "x << y" is an arithmetic left shift of x by y binary digits.
At step S402, $\beta'$ is determined as follows: $\beta' =$
BETA_TABLE[Clip3(0,51,qPL+(beta_offset_div2<<1))].
In HEVC, the following clipping functions are defined:

Clip1Y(x) = Clip3(0, (1 << BitDepthY) - 1, x) where BitDepthYis the bit depth of the samples of the luma array.
Clip1C(x) = Clip3(0, (1 << BitDepthC) - 1, x) where BitDepth$_C$ is the bit depth of the samples of the chroma arrays.

$$\text{Clip3}( \text{ x, y, z } ) = \begin{cases} x & ; & z < x \\ y & ; & z > y \\ z & ; & \text{otherwise} \end{cases}$$

At step S404, β is determined as follows: β = β' * (1 << (BitDepthY - 8 )).
At step S406, tc' is determined as follows: tc' = TC_TABLE[Clip3(0,53,qPL+2*(bS-1)+(tc_offset_div2<<1))].
At step S408, tc is determined as follows: tc = tc' * (1 << (BitDepthY - 8)).

BETA_TABLE[] and TC_TABLE[] can be Look-Up Tables. An example of such tables is given below:

| Q | 0 | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|----|----|----|----|----|----|----|----|----|
| β' | 0 | 0 | 0 | 0 | 0 | 0 | 0 | 0 | 0 | 0 | 0 | 0 | 0 | 0 | 0 | 0 | 6 | 7 | 8 |
| tc' | 0 | 0 | 0 | 0 | 0 | 0 | 0 | 0 | 0 | 0 | 0 | 0 | 0 | 0 | 0 | 0 | 0 | 0 | 1 |
| Q | 19 | 20 | 21 | 22 | 23 | 24 | 25 | 26 | 27 | 28 | 29 | 30 | 31 | 32 | 33 | 34 | 35 | 36 | 37 |
| β' | 9 | 10 | 11 | 12 | 13 | 14 | 15 | 16 | 17 | 18 | 20 | 22 | 24 | 26 | 28 | 30 | 32 | 34 | 36 |
| tc' | 1 | 1 | 1 | 1 | 1 | 1 | 1 | 1 | 2 | 2 | 2 | 2 | 3 | 3 | 3 | 3 | 4 | 4 | 4 |
| Q | 38 | 39 | 40 | 41 | 42 | 43 | 44 | 45 | 46 | 47 | 48 | 49 | 50 | 51 | 52 | 53 | | | |
| β' | 38 | 40 | 42 | 44 | 46 | 48 | 50 | 52 | 54 | 56 | 58 | 60 | 62 | 64 | - | - | | | |
| tc' | 5 | 5 | 6 | 6 | 7 | 8 | 9 | 10 | 11 | 13 | 14 | 16 | 18 | 20 | 22 | 24 | | | |

At step S410, it is decided whether or not to filter. This step is identical to S301 of Figure 3.
At step S412, it is decided whether strong or weak filtering applies. This step is identical to S302 of Figure 3.
At step S414, block boundary is filtered. S414 is a detailed description of S304 according to an embodiment.
dpq0 = dp0+dq0; dpq3 = dp3+dq3

- dp = dp0+dp3 ; dq = dq0+dq3
- dE = dEp = dEq = 0
- If (dpq0 + dpq3 < β) (filter on/off decision)

  ○ If ((2*dpq0 <(β>>2)) && (|p3,0- p0,0| + |q3,0- q0,0| <(β>>3)) && (| p0,0- q0,0| <((5*tc+1)>>1))) dSam0 = 1
  ○ If ((2*dpq3 <(β>>2)) && (|p3,3- p0,3| + |q3,3- q0,3| <(β>>3)) && (| p0,3- q0,3| <((5*tc+1)>>1))) dSam3 = 1
  ○ If (dSam0 ==1 && dSam3 ==1) dE = 2 (strong filter); else dE = 1 (weak filter);
  ○ If (dp < ((β+(β>>1))>>3)) dEp = 1 (dEp is used to determine number of filtered samples for weak filter)
  ○ If (dq < ((β+(β>>1))>>3)) dEq = 1 (dEq is used to determine number of filtered samples for weak filter)

"x && y" is a boolean logical "and" of x and y.

**Luma Strong Filtering Mechanism**

- 4-pixel segment shares the same decision (dE, dEp, dEq)
- If (dE ==2), strong filter applies to modify three pixels each side

  - p0' = Clip3(p0-2*tc, p0+2*tc, (p2 + 2*p1 + 2*p0 + 2*q0 + q1 + 4) >> 3)
  - p1' = Clip3( p1-2*tc, p1+2*tc, (p2 + p1 + p0 + q0 + 2) >> 2 )
  - p2' = Clip3(p2-2*tc, p2+2*tc, (2*p3 + 3*p2 + p1 + p0 + q0 + 4) >> 3)
  - q0' = Clip3(q0-2*tc, q0+2*tc, (p1 + 2*p0 + 2*q0 + 2*q1 + q2 + 4) >> 3)
  - q1' = Clip3(q1-2*tc, q1+2*tc, (p0 + q0 + q1 + q2 + 2) >> 2)
  - q2' = Clip3(q2-2*tc, q2+2*tc, (p0 + q0 + q1 + 3*q2 + 2*q3 + 4) >> 3)

**Luma Weak Filtering Mechanism**

- 4-pixel segment shares a same decision (dE, dEp, dEq)
- If (dE ==1), weak filter applies to modify one or two pixels each side
- Δ = (9*(q0- p0)-3*(q1-p1)+8)>>4
- If (abs(Δ) < tc*10), the following ordered steps apply:

7

- Filtered sample value p0' and q0' are specified as:

$\Delta$ = Clip3(-tc,tc,A)
p0' = Clip1Y(p0+$\Delta$)
q0' = Clip1Y(q0-$\Delta$)

- If dEp is equal to 1, the filtered sample value p1' is specified as follows:

$\Delta$p = Clip3(-(tc>>1), tc>>1, (((p2+p0+1)>>1)-p1+$\Delta$)>>1) p1' = Clip1Y(p1+$\Delta$p)

- if dEq is equal to 1, the filtered sample value q1' is specified as follows:

$\Delta$q = Clip3(-(tc>>1), tc>>1, (((q2+q0+1)>>1)-q1-$\Delta$)>>1)
q1' = Clip1Y(q1+$\Delta$q))

In HEVC, the filter parameters ($\beta$ and tc) can be adjusted with offsets, namely syntax elements slice_beta_offset_div2 and slice_tc_offset_div2. By default, slice_beta_offset_div2 and slice_tc_offset_div2 are equal to 0. slice_beta_offset_div2 and slice_tc_offset_div2 specify the deblocking parameter offsets for $\beta$ and tc (divided by 2) for the current slice. In all embodiments, slice_tc_offset_div2 and slice_beta_offset_div2 can be replaced by pps_tc_offset_div2 and pps_beta_offset_div2 that specify the deblocking parameter offsets for $\beta$ and tc (divided by 2) that are applied for slices referring to the Picture Parameter Set (PPS). When not present, the values of slice_beta_offset_div2 and slice_tc_offset_div2 are inferred to be equal to pps_beta_offset_div2 and pps_tc_offset_div2, respectively.

**Figure 7** represents a flowchart of a method for encoding a picture block in a bitstream according to a specific and non-limiting embodiment.

The method starts at step S100. At step S110, a transmitter 1000, e.g. such as the encoder 100, accesses a picture part. At step S120, the transmitter encodes and reconstructs the picture part in order to obtain a reconstructed picture part. The picture part is usually divided into blocks and encoding the picture part comprises encoding each block of the picture part. Encoding a block usually but not necessarily comprises subtracting a predictor from the block to obtain a block of residuals, transforming the block of residuals into a block of transform coefficients, quantizing the block of coefficients with a quantization step size QP to obtain a quantized block of transform coefficients and entropy coding the quantized block of transform coefficients in the bitstream. Reconstructing a block on the encoder side usually but not necessarily comprises de-quantizing (i.e. inverse quantizing) and inverse transforming the quantized block of transform coefficients to obtain a block of residuals and adding the predictor to the block of residuals to obtain a reconstructed block.

At step S130, the reconstructed picture part is filtered with a deblocking filter wherein at least one parameter of the deblocking filter is determined responsive to an average luma value of samples around block edges to be filtered. The method ends at step S180.

**Figure 8** depicts a flowchart of deblocking filtering process according to a first embodiment. The steps identical to the steps of Figure 4 are identified on Figure 8 with the same numerical references.

At step S401, local luma values are computed. More precisely, average luma values around the block boundaries to be filtered are computed. In an exemplary embodiment the following values are computed:

$$p_0 = (p_{20} + p_{10} + p_{00}) / 3; \ p_3 = (p_{23} + p_{13} + p_{03}) / 3;$$

$$q_0 = (q_{20} + q_{10} + q_{00}) / 3; \ q_3 = (q_{23} + q_{13} + p_{03}) / 3;$$

At step S403, the parameter $\beta$' is computed based on the average luma values.

To this aim, the value of the parameters slice_beta_offset_div2 is increased, e.g. by 1, in case of dark sample values, and decreased, e.g. by 1, in case of bright sample values. As an example, if (p0 <th_dark and p3 <th_dark) or (q0 <th_dark and q3 <th_dark), i.e. for a dark block, slice_beta_offset_div2 = slice_beta_offset_div2 +1.

If (p0 >=th_bright and p3 >=th_bright) or (q0 >=th_bright && q3 >=th_bright), i.e. for a bright block, slice_beta_offset_div2 = slice_beta_offset_div2 - 1. Otherwise, slice_beta_offset_div2 is unchanged.

In other embodiments, slice_beta_offset_div2 can be increased or decreased by other value than 1.

In yet another embodiment, slice_beta_offset_div2 is decreased by a value for dark blocks and slice_beta_offset_div2 is increased by a value for bright blocks.

β ' is then computed as follows:

$$\beta'=BETA\_TABLE[Clip3(0,51,qPL+(beta\_offset\_div2<<1))\,]\ (Eq.\ 1).$$

th_dark and th_bright are parameters that can be pre-defined or signaled in the bitstream. In a variant, different values are specified by default for various transfer functions, and deduced from the information transfer_characteristics which indicates the opto-electronic transfer characteristic of the source picture.

Specific transfer functions are generally used to enable a compact representation of HDR content using limited bit depth representations (typically 10 bits). Perceptual Quantizer (PQ), published by SMPTE as SMPTE ST 2084, is a transfer function that allows for the display of high dynamic range (HDR) video with a luminance level of up to 10,000 cd/m2 and can be used with the Rec. 2020 color space. PQ is a non-linear electro-optical transfer function (EOTF). Hybrid Log-Gamma (HLG) is another transfer function jointly developed by the BBC and NHK. It is compatible with standard dynamic range (SDR) displays, although it requires 10-bit color depth. HLG defines a transfer function in which the lower half of the signal values use a gamma curve and the upper half of the signal values use a logarithmic curve.

The transfer functions are typically signaled into the bitstream, in the VUI. For instance, in HEVC it is indicated using the syntax element transfer_characteristics.

In the HEVC VUI, the following is specified.

- Transfer characteristic = 16 is used to indicate the use of content in the Rec. ITU-R BT.2100-0 perceptual quantization (PQ) format.
- Transfer characteristic = 18 Transfer characteristic = 18 is used to indicate the use of content in the Rec. ITU-R BT.2100-0 hybrid log-gamma (HLG) format.

As an example, in the case where transfer_characteristics = 16, th_dark = 119, th_bright = 510. Other values can be used.

slice_beta_offset_div2 is thus a function f() of average luma samples. f() can be a piecewise linear function that can be transmitted in the stream (e.g. in the SPS, PPS or slice header). In a variant, default functions can be defined that depend on the transfer function, that is indicated by the syntax element transfer_characteristics.

In a second embodiment, the parameter β' is adjusted using a new syntax element, beta_factor, that enables to enrich the control of beta. Equation (1) is thus replaced by equation (2). A factor is thus used to adjust β'. β' is adjusted as follows:

$$\beta^{'} = BETA\_TABLE[Clip3(0,51,qPL+(beta\_offset\_div2<<1))\,]\ *\ beta\_factor\ \ (Eq.\ 2)$$

For Q=20, β' = BETA_TABLE[20] * beta_factor = 10 * beta_factor. In this case, β' is larger than 0 except if beta_factor is equal to 0. On the contrary, in HEVC, in the case where slice_beta_offset_div2 = -5, β'[Q] for Q=20-10, i.e. Q=10, is equal to zero. In this latter case the DBF is disabled for a lower Q than when the beta_factor is used. The syntax element beta_factor can be encoded in the bitstream. An example of syntax is provided below. The first and second embodiments can advantageously be combined.

In a third embodiment, the value of β' is clipped to limit the difference with the value computed according to the prior art, namely according to HEVC.

β ' = Clip3(BETA_TABLE[Clip3(0,51,qPL+(beta_offset_div2<<1))] * beta_factor, 0, BETA_TABLE[Clip3(0,51,qPL+(beta_offset_div2<<1))] + max_beta_deviation). max_beta_deviation specifies the maximum deviation of β.

The following syntax changes are proposed (changes are in Italics) to be used for the second and third embodiments. The corresponding semantics of the new syntax elements is also provided.

### Picture parameter set RBSP syntax

| pic_parameter_set_rbsp( ) { | Descriptor |
|---|---|
| ... | |
| **deblocking_filter_control_present_flag** | u(1) |
| if( deblocking_filter_control_present_flag ) { | |
| **deblocking_filter_override_enabled_flag** | u(1) |
| **pps_deblocking_filter_disabled_flag** | u(1) |
| if( !pps_deblocking_filter_disabled_flag ) { | |
| **pps_beta_offset_div2** | se(v) |
| **pps_tc_offset_div2** | se(v) |
| *pps_beta_factor_mult4* | *ue(v)* |
| *pps_tc_factor_mult4* | *ue(v)* |
| *pps_max_beta_deviation* | *se(v)* |
| | |
| } | |
| } | |
| ... | |

**pps_beta_factor_mult4** and **pps_tc_factor_mult4** specify the default deblocking parameter factors for β and tc (multiplied by 4) that are applied for pictures referring to the picture parameter set, unless the default deblocking parameter factors are overridden by the deblocking parameter factors present in the slice header for pictures referring to the picture parameter set. When not present, the value of beta_factor_mult4 and tc_factor_mult4 are inferred to be equal to 4.

**pps_max_beta_deviation** specifies the maximum deviation for β that is applied for pictures referring to the picture parameter set, unless the default maximum deviation parameter is overriden by the maximum deviation parameter present in the slice header for pictures referring to the picture parameter set. When not present, the value of max_beta_deviation is inferred to be equal to 0.

In another embodiment, a syntax element **pps_max_tc_deviation** can be added after pps_max_beta_deviation. pps_max_tc_deviation specifies the maximum deviation for tc that is applied for pictures referring to the picture parameter set, unless the default maximum deviation parameter is overriden by the maximum deviation parameter present in the slice header for pictures referring to the picture parameter set. When not present, the value of pps_max_tc_deviation is inferred to be equal to 0.

In yet another embodiment, th_dark and th_bright can be added, for example after the deviation syntax element(s).

### Slice header syntax

| slice_segment_header( ) { | Descriptor |
|---|---|
| … | |
| if( deblocking_filter_override_enabled_flag ) | |
| **deblocking_filter_override_flag** | u(1) |
| if( deblocking_filter_override_flag ) { | |
| **slice_deblocking_filter_disabled_flag** | u(1) |
| if( !slice_deblocking_filter_disabled_flag) { | |
| **slice_beta_offset_div2** | se(v) |
| **slice_tc_offset_div2** | se(v) |
| *slice_beta_factor_mult4* | *ue(v)* |
| *slice_tc_factor_mult4* | *ue(v)* |
| *slice_max_beta_deviation* | *se(v)* |
| | |
| } | |
| } | |
| … | |

**slice_beta_factor_mult4** and **slice_tc_factor_mult4** specify the deblocking parameter factors for β and tc for the current slice (multiplied by 4).

**slice_max_beta_deviation** specifies the maximum deviation for β for the current slice. In another embodiment, a syntax element **slice_max_tc_deviation** may be added after slice_max_beta_deviation. slice_max_tc_deviation specifies the maximum deviation for tc for the current slice.

In yet another embodiment, th_dark and th_bright can be added, for example after the deviation syntax element(s).

The third embodiment can be combined with the first and/or second embodiments.

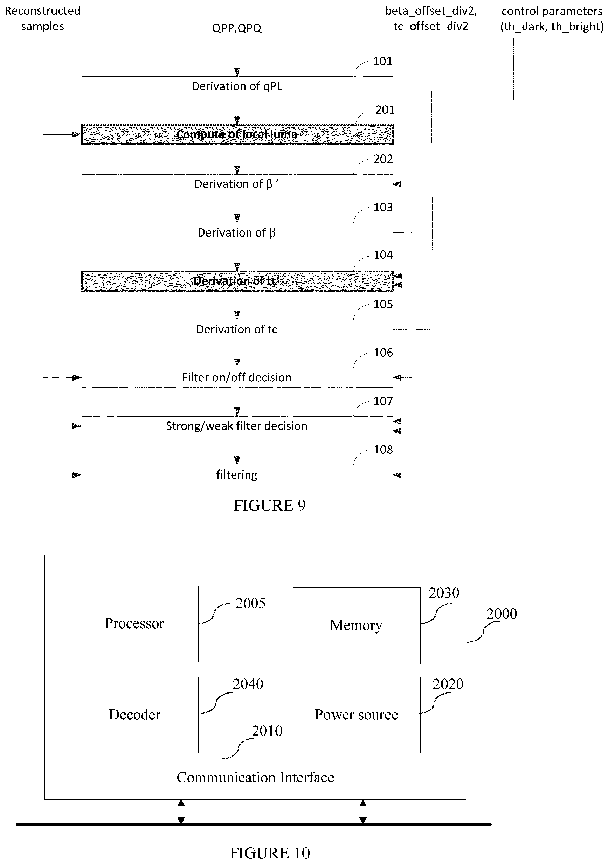

The principles of the first, second and third embodiments can also apply in a similar manner to the parameter tc' as depicted on **Figure 9.**

To this aim, the value of the parameters slice_tc_offset_div2 is increased, e.g. by 1, in case of dark sample values, and decreased, e.g. by 1, in case of bright sample values. As an example, if (p0 <th_dark and p3 <th_dark) or (q0 <th_dark and q3 <th_dark), i.e. for a dark block, slice_tc_offset_div2 = slice_tc_offset_div2 +1.

If (p0 >=th_bright and p3 >=th_bright) or (q0 >=th_bright && q3 >=th_bright), i.e. for a bright block, slice_tc_offset_div2 = slice_tc_offset_div2 - 1.

Otherwise, slice_beta_offset_div2 is unchanged.

tc' is then computed as follows: tc' = TC_TABLE[Clip3(0,53,qPL+2*(BS-1)+(tc_offset_div2<<1))]. The values of th_dark and th_bright for slice_tc_offset_div2 can be identical or different from the value used for beta_offset_div2.

In another embodiment, tc' can also be adjusted as follows:

tc' = TC_TABLE[Clip3(0,53,qPL+2*(BS-1)+(tc_offset_div2<<1))] * tc_factor .

In another embodiment, tc' can also be clipped as follows: tc' = Clip3(TC_TABLE[Clip3(0,53,qPL+2*(BS-1)+(tc_offset_div2<<1))]*tc_factor, 0, TC_TABLE[Clip3(0,53,qPL+2*(BS-1)+(tc_offset_div2<<1))] + max_tc_deviation). max_tc_deviation specifies the maximum deviation of tc.

In at least one embodiment, deblocking filter parameters (typically β' and tc') are derived depending on local signal values and possibly on information related to the format of the content while in HEVC these parameters were only derived from global (slice level parameters) and from QP values of the block to filter.

**Figure 10** represents an exemplary architecture of a receiver 2000 configured to decode a picture from a bitstream to obtain a decoded picture according to a specific and non-limiting embodiment.

The receiver 2000 comprises one or more processor(s) 2005, which could comprise, for example, a CPU, a GPU and/or a DSP (English acronym of Digital Signal Processor), along with internal memory 2030 (e.g. RAM, ROM and/or EPROM). The receiver 2000 comprises one or more communication interface(s) 2010 (e.g. a keyboard, a mouse, a touchpad, a webcam), each adapted to display output information and/or allow a user to enter commands and/or data (e.g. the decoded picture); and a power source 2020 which can be external to the receiver 2000. The receiver 2000 can also comprise one or more network interface(s) (not shown). The decoder module 2040 represents the module that can be included in a device to perform the decoding functions. Additionally, the decoder module 2040 can be implemented as a separate element of the receiver 2000 or can be incorporated within processor(s) 2005 as a combination of hardware and software as known to those skilled in the art.

The bitstream can be obtained from a source. According to different embodiments, the source can be, but is not limited to:

- a local memory, e.g. a video memory, a RAM, a flash memory, a hard disk;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (e.g. a sensor such as, for example, a CCD (or Charge-Coupled Device) or CMOS (or Complementary Metal-Oxide-Semiconductor)).

According to different embodiments, the decoded picture can be sent to a destination, e.g. a display device. As an example, the decoded picture is stored in a remote or in a local memory, e.g. a video memory or a RAM, a hard disk. In a variant, the decoded picture is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

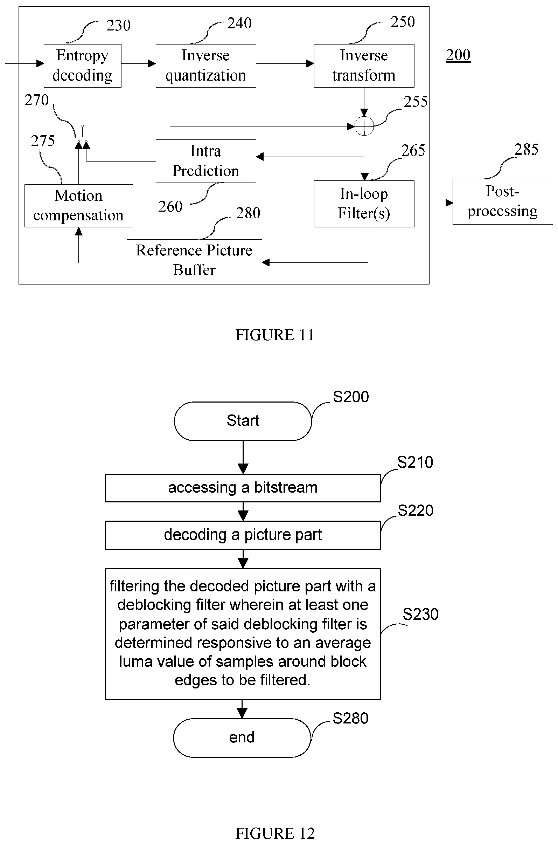

According to a specific and non-limiting embodiment, the receiver 2000 further comprises a computer program stored in the memory 2030. The computer program comprises instructions which, when executed by the receiver 2000, in particular by the processor 2005, enable the receiver to execute the decoding method described with reference to Figure 12. According to a variant, the computer program is stored externally to the receiver 2000 on a non-transitory digital data support, e.g. on an external storage medium such as a HDD, CD-ROM, DVD, a read-only and/or DVD drive and/or a DVD Read/Write drive, all known in the art. The receiver 2000 thus comprises a mechanism to read the computer program. Further, the receiver 2000 could access one or more Universal Serial Bus (USB)-type storage devices (e.g., "memory sticks.") through corresponding USB ports (not shown).

According to exemplary and non-limiting embodiments, the receiver 2000 can be, but is not limited to:

- a mobile device;
- a communication device;
- a game device;
- a set top box;
- a TV set;
- a tablet (or tablet computer);
- a laptop;
- a video player, e.g. a Blu-ray player, a DVD player;
- a display; and
- a decoding chip or decoding device/apparatus.

**Figure 11** illustrates a block diagram of an exemplary video decoder 200, e.g. of the HEVC type, adapted to execute the decoding method of figure 12. Figure 11 may also illustrate a decoder in which improvements are made to the HEVC standard or an encoder employing technologies similar to HEVC, such as a JEM (Joint Exploration Model) decoder. The video decoder 200 is an example of a receiver 2000 or part of such a receiver 2000. In the exemplary decoder 200, a bitstream is decoded by the decoder elements as described below. Video decoder 200 generally performs a decoding pass reciprocal to the encoding pass as described in Figure 2, which performs video decoding as part of encoding video data.

In particular, the input of the decoder includes a video bitstream, which can be generated by the video encoder 100. The bitstream is first entropy decoded (230) to obtain transform coefficients, motion vectors, and other coded information. The transform coefficients are de-quantized (240) and inverse transformed (250) to decode residuals. The decoded residuals are then combined (255) with a predicted block (also known as a predictor) to obtain a decoded/reconstructed picture block. The predicted block can be obtained (270) from intra prediction (260) or motion-compensated prediction (i.e., inter prediction) (275). AMVP and merge mode techniques can be used during motion compensation, which can use interpolation filters to calculate interpolated values for sub-integer samples of a reference block. An in-loop filter (265) is applied to the reconstructed picture. The in-loop filter can comprise a deblocking filter and a SAO filter. The filtered picture is stored at a reference picture buffer (280). The decoded picture can further go through post-decoding processing (285), for example, an inverse color transform (e.g. conversion from YCbCr 4:2:0 to RGB 4:4:4) or an inverse remapping performing the inverse of the remapping process performed in the pre-encoding processing (101). The post-decoding processing may use metadata derived in the pre-encoding processing and signaled in the bitstream.

**Figure 12** represents a flowchart of a method for decoding a picture from a bitstream according to a specific and non-limiting embodiment.

The method starts at step S200. At step S210, a receiver 2000 such as the decoder 200 accesses a bitstream. At step S220, the receiver decodes a picture part from the bitstream. Decoding the picture part comprises decoding each block of the picture part. Decoding a block usually but not necessarily comprises entropy decoding a portion of the bitstream representative of the block to obtain a block of transform coefficients, de-quantizing and inverse transforming the block of transform coefficients to obtain a block of residuals and adding a predictor to the block of residuals to obtain a decoded block.

At step S230, the decoded picture part is filtered with a deblocking filter wherein at least one parameter of the deblocking filter is determined responsive to an average luma value of samples around block edges to be filtered. The embodiments disclosed with respect to the encoder side (Figures 7 to 9) also apply on the decoder side.

The method ends at step S280.

It is to be understood that the figures and descriptions have been simplified to illustrate elements that are relevant for a clear understanding of the present embodiments, while eliminating, for purposes of clarity, many other elements found in typical encoding and/or decoding devices. It will be understood that, although the terms first and second can be used herein to describe various elements, these elements should not be limited by these terms. These terms are only used to distinguish one element from another.

Various methods are described above, and each of the methods comprises one or more steps or actions for achieving the described method. Unless a specific order of steps or actions is required for proper operation of the method, the order and/or use of specific steps and/or actions can be modified or combined.

Various numeric values are used in the present application. It should be noted that the specific values are for exemplary purposes and the present embodiments are not limited to these specific values.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, moving the information, copying the information, calculating the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", "at least one of", and "one or more of A, B and C", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This can be extended, as readily apparent by one of ordinary skill in this and related arts, for as many items listed.

The implementations described herein can be implemented in, for example, a method or a process, an apparatus, a software program, a data stream, or a signal. Even if only discussed in the context of a single form of implementation (for example, discussed only as a method or a device), the implementation of features discussed can also be implemented in other forms (for example a program). An apparatus can be implemented in, for example, appropriate hardware, software, and firmware. The methods can be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein can be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment can be mobile and even installed in a mobile vehicle.

Additionally, the methods can be implemented by instructions being performed by a processor, and such instructions (and/or data values produced by an implementation) can be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions can form an application program tangibly embodied on a processor-readable medium. Instructions can be, for example, in hardware, firmware, software, or a combination. Instructions can be found in, for example, an operating system, a separate application, or a combination of the two. A processor can be characterized, therefore, as, for example, both a device configured to carry out a process and a device that includes a processor-readable medium (such as a storage device) having instructions for carrying out a process. Further, a processor-readable medium can store, in addition to or in lieu of instructions, data values produced by an implementation.

As will be evident to one of skill in the art, implementations can produce a variety of signals formatted to carry information that can be, for example, stored or transmitted. The information can include, for example, instructions for performing a method, or data produced by one of the described implementations. For example, a signal can be formatted to carry as data the rules for writing or reading the syntax of a described embodiment, or to carry as data the actual syntax-values written by a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

A number of implementations have been described. Nevertheless, it will be understood that various modifications can be made. For example, elements of different implementations can be combined, supplemented, modified, or removed to produce other implementations. Additionally, one of ordinary skill will understand that other structures and processes can be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

Various embodiments are described with respect to the HEVC standard. However, the present embodiments are not limited to HEVC, and can be applied to other standards, recommendations, and extensions thereof, including for example HEVC or HEVC extensions like Format Range (RExt), Scalability (SHVC), Multi-View (MV-HEVC) Extensions and future video coding standards, e.g. those developed by Joint Video Experts Team (JVET). The various embodiments are described with respect to the encoding/decoding of a picture block. They can be applied to encode/decode a whole picture or a whole sequence of pictures.

We have described a number of embodiments. These embodiments provide, at least, for the following generalized claims, including all combinations, across various different claim categories and types:

We have described a number of embodiments. These embodiments provide, at least, for the following generalized inventions and claims, including all combinations, across various different claim categories and types:

- Adaptation when deriving loop filtering parameters.
- Adaptation when applying loop filtering in an encoder and/or in a decoder.
- In at least one implementation, the adaptation is based on local signal information.
- In at least one implementation, the adaptation is based on content format information.
- In at least one implementation, the adaptation is based on local signal information and content format information.
- In at least one implementation, the adaptation is a function of the local luma value.
- In a more generic implementation, the adaptation is dependent on local luma and/or chroma signal properties (such as local average values, local variance values).
- In at least one implementation, information is signaled in a bitstream that indicates adaptation on an encoder-side when deriving loop filtering parameters.
- In at least one implementation, signaled information from a bitstream is used at a decoder to provide adaption in loop filtering parameters.
- In at least one implementation, the local luma value is an average luma value.
- In at least one implementation, the at least one parameter is modified depending on the local luma value.

- In at least one implementation, the at least one parameter is increased or decreased by a first value in the case where the local luma value is below a second value.
- In at least one implementation, the at least one parameter is increased or decreased by a third value in the case where the local luma value is above a fourth value.
- In at least one implementation, the second and fourth value depends on the opto-electronic transfer characteristic of the source picture.
- In at least one implementation, the at least one parameter is adjusted by a multiplying factor.
- In at least one implementation, the at least one parameter is clipped in the case of high quantization values.
- In at least one implementation, the at least one parameter is a deblocking parameter offset.
- A bitstream or signal that includes one or more of the described syntax elements, or variations thereof.
- Creating and/or transmitting and/or receiving and/or decoding a bitstream or signal that includes one or more of the described syntax elements, or variations thereof.
- A TV, set-top box, cell phone, tablet, or other electronic device that performs adaptation of filter parameters according to any of the embodiments described.
- A TV, set-top box, cell phone, tablet, or other electronic device that performs adaptation of filter parameters according to any of the embodiments described, and that displays (e.g. using a monitor, screen, or other type of display) a resulting image.
- A TV, set-top box, cell phone, tablet, or other electronic device that tunes (e.g. using a tuner) a channel to receive a signal including an encoded image, and performs adaptation of filter parameters according to any of the embodiments described.
- A TV, set-top box, cell phone, tablet, or other electronic device that receives (e.g. using an antenna) a signal over the air that includes an encoded image, and performs adaptation of filter parameters according to any of the embodiments described.

Various other generalized, as well as particularized, claims are also supported and contemplated throughout this disclosure.

**Claims**

1. A decoding method comprising :

   - decoding a picture part;
   - filtering the decoded picture part with a loop filter, at least one parameter of said loop filter being determined responsive to a local luma value.

2. An encoding method comprising:

   - reconstructing a picture part;
   - filtering the reconstructed picture part with a loop filter, at least one parameter of said loop filter being determined responsive to a local luma value.

3. A decoding device comprising one or more processor configured to perform:

   - decoding a picture part;
   - filtering the decoded picture part with a loop filter, at least one parameter of said loop filter being determined responsive to a local luma value.

4. An encoding device comprising one or more processor configured to perform:

   - reconstructing a picture part;
   - filtering the reconstructed picture part with a loop filter, at least one parameter of said loop filter being determined responsive to a local luma value.

5. The method of claim 1 or 2, or the device of claim 3 or 4, wherein the local luma value is an average luma value.

6. The method of any one of claims 1-2 and 5, or the device of any one of claims 3-4 and 5, wherein said at least one parameter is modified depending on the local luma value.

7. The method of any one of claims 1-2 and 5-6, or the device of any one of claims 3-4 and 5-6, wherein said at least one parameter is increased or decreased by a first value in the case where the local luma value is below a second value.

8. The method of any one of claims 1- 2 and 5-6, or the device of any one of claims 3-4 and 5-6, wherein said at least one parameter is increased or decreased by a third value in the case where the local luma value is above a fourth value.

9. The method of any one of claims 7-8, or the device of any one of claims 7-8, wherein the second and fourth value depends on the opto-electronic transfer characteristic of the source picture.

10. The method of any one of claims 1- 2 and 5-9, or the device of any one of claims 3-4 and 5-9, wherein said at least one parameter is adjusted by a multiplying factor.

11. The method of any one of claims 1- 2 and 5-10 or the device of any one of claims 3-4 and 5-10, wherein said at least one parameter is clipped in the case of high quantization values.

12. The method of any one of claims 1-2 and 5-11 or the device of any one of claims 3-4 and 5-11, wherein said at least one parameter is a deblocking parameter offset.

13. A signal comprising data generated according to the encoding method of any one of claims 2 and 5-12 or encoding device of any one of claims 4 and 5-12.

14. A non-transitory computer readable medium containing data content generated according to the method or the device of any of the preceding claims.

1000

Processor ⌇1005

Memory ⌇1030

Encoder ⌇1040

Power source ⌇1020

1010

Communication Interface

FIGURE 1

101

110  125  130  145

Pre-processing

Transform  Quantization  Entropy coding

Inverse Quantization  140

Inverse Transform  150

155

105  Intra prediction  165  160

170  Motion Compensation

In-loop Filter(s)

Motion Estimation  175

Reference Picture Buffer  180

100

FIGURE 2

S300

BS calculation

S301

Apply filter
(BS>0) ?

yes

S302

Decide filter
strength

S304

Filtering

no

Figure 3

Reconstructed
samples

QPP,QPQ

beta_offset_div2,
tc_offset_div2

S400
Derivation of qPL

S402
Derivation of $\beta'$

S404
Derivation of $\beta$

S406
Derivation of tc'

S408
Derivation of tc

S410
Filter on/off decision

S412
Strong/weak filter decision

S414
filtering

Figure 4

Figure 5

| | | | | | | | |
|---|---|---|---|---|---|---|---|
| $p_{30}$ | $p_{20}$ | $p_{10}$ | $p_{00}$ | $q_{00}$ | $q_{10}$ | $q_{20}$ | $q_{30}$ |
| $p_{31}$ | $p_{21}$ | $p_{11}$ | $p_{01}$ | $q_{01}$ | $q_{11}$ | $q_{21}$ | $q_{31}$ |
| $p_{32}$ | $p_{22}$ | $p_{12}$ | $p_{02}$ | $q_{02}$ | $q_{12}$ | $q_{22}$ | $q_{32}$ |
| $p_{33}$ | $p_{23}$ | $p_{13}$ | $p_{03}$ | $q_{03}$ | $q_{13}$ | $q_{23}$ | $q_{33}$ |
| $p_{34}$ | $p_{24}$ | $p_{14}$ | $p_{04}$ | $q_{04}$ | $q_{14}$ | $q_{24}$ | $q_{34}$ |
| $p_{35}$ | $p_{25}$ | $p_{15}$ | $p_{05}$ | $q_{05}$ | $q_{15}$ | $q_{25}$ | $q_{35}$ |
| $p_{36}$ | $p_{26}$ | $p_{16}$ | $p_{06}$ | $q_{06}$ | $q_{16}$ | $q_{26}$ | $q_{36}$ |
| $p_{37}$ | $p_{27}$ | $p_{17}$ | $p_{07}$ | $q_{07}$ | $q_{17}$ | $q_{27}$ | $q_{37}$ |

1$^{st}$ 4 lines

2$^{nd}$ 4 lines

Figure 6

S100

Start

S110

accessing a picture part

S120

encoding and reconstructing the picture part

filtering the reconstructed picture part with a
deblocking filter wherein at least one
parameter of said deblocking filter is
determined responsive to an average luma
value of samples around block edges to be
filtered.

S130

S180

end

FIGURE 7

Reconstructed
samples

QPP,QPQ

beta_offset_div2,
tc_offset_div2

control parameters
(th_dark, th_bright)

S400

Derivation of qPL

S401

**Compute of local luma**

S403

**Derivation of β'**

S404

Derivation of β

S406

Derivation of tc'

S408

Derivation of tc

S410

Filter on/off decision

S412

Strong/weak filter decision

S414

filtering

FIGURE 8

FIGURE 9

FIGURE 10

230 240 250

Entropy decoding → Inverse quantization → Inverse transform

200

270

275

Intra Prediction

255

265

285

Motion compensation

260

280

In-loop Filter(s)

Post-processing

Reference Picture Buffer

FIGURE 11

S200
Start

S210
accessing a bitstream

S220
decoding a picture part

filtering the decoded picture part with a deblocking filter wherein at least one parameter of said deblocking filter is determined responsive to an average luma value of samples around block edges to be filtered.

S230

S280
end

FIGURE 12

Europäisches
Patentamt

European
Patent Office

Office européen
des brevets

# EUROPEAN SEARCH REPORT

Application Number

EP 18 30 5762

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | IWAMURA S ET AL: "Description of SDR and HDR video coding technology proposal by NHK and Sharp", 10. JVET MEETING; 10-4-2018 - 20-4-2018; SAN DIEGO; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-J0027, 2 April 2018 (2018-04-02), XP030151195, * the whole document * | 1-14 | INV. H04N19/86 H04N19/82 H04N19/70 H04N19/117 H04N19/14 H04N19/182 |
| X | ANDREY NORKIN ET AL: "HEVC Deblocking Filter", IEEE TRANSACTIONS ON CIRCUITS AND SYSTEMS FOR VIDEO TECHNOLOGY, INSTITUTE OF ELECTRICAL AND ELECTRONICS ENGINEERS, US, vol. 22, no. 12, 1 December 2012 (2012-12-01), pages 1746-1754, XP011487156, ISSN: 1051-8215, DOI: 10.1109/TCSVT.2012.2223053 | 1-4,10, 11 | |
| A | * the whole document * | 5-9, 12-14 | TECHNICAL FIELDS SEARCHED (IPC) H04N |
| X | YAMAKAGE T ET AL: "CE12: Deblocking filter parameter adjustment in slice level", 7. JCT-VC MEETING; 98. MPEG MEETING; 21-11-2011 - 30-11-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-G174, 8 November 2011 (2011-11-08), XP030110158, | 1-4 | |
| A | * the whole document * | 5-14 | |

The present search report has been drawn up for all claims

| Place of search | Date of completion of the search | Examiner |
|---|---|---|
| Munich | 14 September 2018 | Cyranka, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)